(19) Europäisches Patentamt
European Patent Office
Office européen des brevets

(11) **EP 2 887 093 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(51) Int Cl.:
**G01S 15/93** *(2020.01)*  **G01S 7/539** *(2006.01)*
**G01S 15/50** *(2006.01)*  **G01S 15/87** *(2006.01)*

(21) Anmeldenummer: **14196722.4**

(22) Anmeldetag: **08.12.2014**

(54) **Verfahren zum Klassifizieren eines Objekts, Sensoreinrichtung und Kraftfahrzeug**

Method for classifying an object, sensor device and motor vehicle

Procédé de classification d'un objet, dispositif de capteur et véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2013 DE 102013021837**

(43) Veröffentlichungstag der Anmeldung:
**24.06.2015 Patentblatt 2015/26**

(73) Patentinhaber: **Valeo Schalter und Sensoren GmbH**
**74321 Bietigheim-Bissingen (DE)**

(72) Erfinder:
• **Zuther, Sebastian**
**74321 Bietigheim-Bissingen (DE)**
• **Heimberger, Marco**
**74321 Bietigheim-Bissingen (DE)**

(74) Vertreter: **Withopf, Kristina et al**
**Valeo Schalter und Sensoren GmbH**
**CDA-IP**
**Laiernstraße 12**
**74321 Bietigheim-Bissingen (DE)**

(56) Entgegenhaltungen:
**EP-A2- 2 317 338    EP-A2- 2 333 578**
**DE-A1- 4 023 538    DE-A1- 10 361 315**
**DE-A1-102009 045 286**

**Beschreibung**

Die Erfindung betrifft ein Verfahren zum Klassifizieren eines in einem Umgebungsbereich eines Kraftfahrzeuges befindlichen Objekts mittels einer Sensoreinrichtung des Kraftfahrzeugs. Die Erfindung betrifft außerdem eine Sensoreinrichtung, welche zum Durchführen eines erfindungsgemäßen Verfahrens ausgebildet ist, sowie ein Kraftfahrzeug mit einer solchen Sensoreinrichtung.

Vorliegend richtet sich das Interesse insbesondere auf die Klassifizierung von Objekten mithilfe einer Sensoreinrichtung eines Kraftfahrzeugs, welche mindestens einen Abstandssensor aufweist, insbesondere einen Ultraschallsensor. Objektklassifizierungsverfahren zur Klassifizierung von Objekten sind dabei bereits Stand der Technik. So ist beispielsweise aus dem Dokument DE 10 2005 059 902 A1 bereits bekannt, dass ein in der Umgebung eines Kraftfahrzeugs befindliches Objekt abhängig von der Pulslänge eines empfangenen Zielechos klassifiziert werden kann. Es wird dabei ein Sendesignal durch einen Ultraschallsensor ausgesendet und ein Signalanteil des in der Umgebung reflektierten Sendesignals wieder durch den Ultraschallsensor empfangen. Anhand der Pulslänge des empfangenen Zielechos können dann Rückschlüsse auf die Beschaffenheit des Objekts gezogen werden. So weisen eine geringe Pulslänge und Amplitude beispielsweise auf eine geringe Höhe des vermessenen Objekts hin. Der Signalverlauf kann verwendet werden, um zu folgern, ob es sich bei dem Objekt um ein Auto, einen LKW, einen Bordstein, eine Wand, einen Baum usw. handelt.

Ein Objektklassifizierungsverfahren ist des Weiteren aus dem Dokument DE 10 2007 035 219 A1 bekannt.

Das Dokument DE 103 61 315 A1 beschreibt ein Verfahren zum Bestimmen der Position von mindestens einem Reflexionspunkt auf der Oberfläche eines Hindernisses. Dieses Verfahren kann zur Ermittlung des Konturverlaufs von konvex geformten Hindernissen eingesetzt werden.

Um die tatsächliche Position eines Objekts relativ zum Kraftfahrzeug bestimmen zu können, muss zunächst eine Klassifizierung des Objekts vorgenommen werden. Der jeweilige Objekttyp lässt sich jedoch alleine anhand einer einzelnen Messung nicht bestimmen.

DE10361315A1 betrifft ein Verfahren zum Bestimmen der Position von mindestens einem Reflexionspunkt auf einem Hindernis.

DE102009045286A1 beschreibt ein Verfahren zur Abbildung des Umfelds eines Fahrzeugs sowie ein Verfahren zur Ermittlung der Kollisionswahrscheinlichkeit eines Fahrzeugs mit einem Objekt.

In DE4023538A1 sind bei einer Kollisionswarneinrichtung, insbesondere zur Vermeidung von Kollisionen mit stehenden Hindernissen im Nahbereich eines Kraftfahrzeugs, mit einer Einrichtung zur berührungslosen Abstandsmessung, mindestens zwei Ultraschallsensoren in einem vorgegebenen Abstand angeordnet. Eine Einrichtung ist vorgesehen zur Auswertung der Laufzeiten zwischen dem Aussenden jeweils eines Ultraschallsignals und dem Empfangen eines reflektierten Ultraschallsignals des jeweils gleichen und des jeweils anderen Ultraschallsensors (Kreuzmessung).

EP2317338A2 betrifft ein Verfahren zur Erkennung von Objekten mit geringer Höhe mit einem System zur Hinderniserkennung in Fahrzeugen, wobei das System zur Hinderniserkennung Abstandssensoren zur Ermittlung eines Abstandes zu Objekten und mittels Auswertung umfasst.

EP2333578A2 offenbart ein Verfahren zur Bestimmung einer Bewegungsrichtung eines sich auf ein Fahrzeug zu bewegenden Objektes, wobei das Verfahren einen Schritt des Empfangens eines ersten Sensorsignals aufweist, das eine von einer ersten Signalmessposition an einer in Fahrtrichtung gesehen linken Seite des Fahrzeugs gemessene Geschwindigkeit des Objektes auf das Fahrzeug zu repräsentiert. Ferner weist das Verfahren einen weiteren Schritt des Erhaltens eines zweiten Sensorsignals auf, das eine von einer zweiten Signalmessposition an in Fahrtrichtung gesehen rechten Seite des Fahrzeugs gemessene Geschwindigkeit des Objektes auf das Fahrzeug zu repräsentiert. Schließlich umfasst das Verfahren einen Schritt des Verknüpfens des ersten Sensorsignals mit dem zweiten Sensorsignal und einer Information über einen Abstand zwischen der ersten und zweiten Signalmessposition, um eine Bewegungsrichtung eines sich auf das Fahrzeug zu bewegenden Objektes zu bestimmen.

Es ist Aufgabe der Erfindung, eine Lösung aufzuzeigen, wie bei einem Verfahren der eingangs genannten Gattung ein in dem Umgebungsbereich des Kraftfahrzeugs befindliches Objekt durch die Sensoreinrichtung besonders zuverlässig im Hinblick auf die Bestimmung einer genauen Position des Objekts relativ zum Kraftfahrzeug klassifiziert werden kann.

Diese Aufgabe wird erfindungsgemäß durch ein Verfahren, durch eine Sensoreinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Klassifizieren eines in einem Umgebungsbereich eines Kraftfahrzeugs befindlichen Objekts mittels einer Sensoreinrichtung des Kraftfahrzeugs. Von zumindest zwei voneinander unterschiedlichen Sensorpositionen ausgehend werden jeweilige Entfernungswerte zu dem zu klassifizierenden Objekt durch die Sensoreinrichtung erfasst. Das Klassifizieren erfolgt dann in Abhängigkeit von den zumindest zwei Entfernungswerten dahingehend, dass bei dem Objekt zumindest zwischen einem punktförmigen Objekt und einem ausgedehnten Objekt unterschieden wird.

Dies beruht auf der Erkenntnis, dass anhand von zumindest zwei - insbesondere zumindest drei - Entfernungswerten, welche von verschiedenen Sensorpositionen aus ermittelt werden, eine zuverlässige Klassifizierung des Objekts vorgenommen und hierbei zwischen einem ausgedehnten und somit länglichen Objekt einerseits und einem punktförmigen Objekt andererseits unterschieden werden kann. Dadurch kann auch die Position des Objekts relativ zum Kraftfahrzeug präzise ermittelt werden, da bekannt ist, ob es sich bei dem Objekt um einen ausgedehnten und länglichen Gegenstand oder aber um ein Punktobjekt handelt.

Unter einem punktförmigen Objekt wird vorliegend insbesondere ein Gegenstand bzw. ein Hindernis verstanden, welcher/welches in einer Draufsicht von oben eine vorbestimmte Abmessung nicht überschreitet. Ein punktförmiges Objekt ist also bevorzugt ein Hindernis, dessen Abmessung entlang einer Verbindungslinie zwischen den zumindest zwei Sensorpositionen kleiner als eine vorbestimmte Grenzabmessung ist. Entsprechend wird unter einem "ausgedehnten Objekt" ein längliches Hindernis verstanden, welches in Richtung entlang der Verbindungslinie zwischen den zumindest zwei Sensorpositionen eine vorbestimmte Grenzabmessung überschreitet.

Die zumindest zwei Sensorpositionen sind voneinander unterschiedliche Positionen ein und desselben Abstandssensors, beispielsweise eines Ultraschallsensors, der Sensoreinrichtung, sodass die zumindest zwei Entfernungswerte durch den Abstandssensor zu unterschiedlichen Zeitpunkten während einer Bewegung des Kraftfahrzeugs erfasst werden. Mit einem einzigen Abstandssensor lässt sich somit zwischen punktförmigen Objekten und ausgedehnten Objekten unterscheiden.

Bevor die ermittelten Entfernungswerte der Klassifizierung des Objekts zugrunde gelegt werden, wird durch die Sensoreinrichtung überprüft, ob bezüglich dieser Entfernungswerte ein vorbestimmtes Kriterium erfüllt ist. Die zumindest zwei Entfernungswerte werden dann nur unter der Voraussetzung des Erfülltseins des vorbestimmten Kriteriums zur Klassifizierung des Objekts ausgewertet bzw. bei der Klassifizierung berücksichtigt. Unplausible Entfernungswerte bzw. unplausible Gruppen von Entfernungswerten können somit herausgefiltert werden, wodurch die Genauigkeit und Zuverlässigkeit der Klassifizierung verbessert werden können. Ist der Abstand zwischen den Sensorpositionen beispielsweise relativ gering, so ist eine plausible und zuverlässige Klassifizierung des Objekts anhand der Entfernungswerte nicht oder nur eingeschränkt möglich. Solche Situationen können nun durch die Sensoreinrichtung detektiert und die Entfernungswerte gegebenenfalls herausgefiltert werden.

Beim Überprüfen des vorbestimmten Kriteriums wird zusätzlich zu den zumindest zwei Entfernungswerten auch zumindest der folgende Parameter berücksichtigt, nämlich ein Abstand zwischen den zumindest zwei Sensorpositionen, aufgrund einer durch das Kraftfahrzeug zwischen den Zeitpunkten der Erfassung der Entfernungswerte zurückgelegten Wegstrecke.

In einer Ausführungsform kann beim Überprüfen des vorbestimmten Kriteriums zusätzlich der folgende Parameter berücksichtigt werden: ein jeweiliger Messfehler, mit welchem die zumindest zwei Entfernungswerte behaftet sind.

Durch Berücksichtigung dieser Parameter ist es möglich, Entfernungswerte zu identifizieren, welche keine sinnvolle Klassifizierung des Objekts ermöglichen. Auf der anderen Seite können auch Entfernungswerte identifiziert werden, welche sehr wohl eine plausible und zuverlässige Unterscheidung zwischen punktförmigen und ausgedehnten Objekten ermöglichen.

Es ist dabei vorgesehen, dass das vorgegebene Kriterium folgende Bedingung umfasst:

$$R_S - R_B + d > r_S + r_B,$$

wobei $R_S$ den kleineren der Entfernungswerte, $R_B$ den größeren der Entfernungswerte, $d$ den Abstand zwischen den Sensorpositionen, $r_S$ den Messfehler des kleineren Entfernungswerts und $r_B$ den Messfehler des größeren Entfernungswerts bezeichnen. Nach dieser Bedingung soll der Abstand $d$ größer als die Differenz zwischen dem größeren und dem kleineren Entfernungswert sein, wobei zusätzlich noch die möglichen Messfehler berücksichtigt werden.

Es erweist sich als besonders vorteilhaft, wenn von zumindest drei voneinander unterschiedlichen Sensorpositionen aus jeweilige Entfernungswerte zu dem zu klassifizierenden Objekt durch die Sensoreinrichtung erfasst werden und das Klassifizieren in Abhängigkeit von den zumindest drei Entfernungswerten erfolgt. Anhand von zumindest drei Entfernungswerten kann besonders präzise und wirkungsvoll festgestellt werden, ob es sich bei dem Objekt um ein punktförmiges oder aber ein ausgedehntes Objekt handelt. Es ist auch möglich, dass genau drei und somit ausschließlich drei Entfernungswerte zur Klassifizierung des Objekts verwendet werden.

Werden zumindest drei Entfernungswerte verwendet, so kann zu diesen Entfernungswerten jeweils ein Kreis bestimmt werden, dessen Mittelpunkt der jeweiligen Sensorposition und dessen Radius dem jeweiligen Entfernungswert entsprechen. Das Klassifizieren erfolgt dann vorzugsweise durch Auswertung der zumindest drei Kreise. Auf diesem Wege gelingt es, eine exakte Unterscheidung zwischen punktförmigen und ausgedehnten Objekten zu treffen.

Zu jedem Paar aus zwei benachbarten Kreisen kann dann jeweils ein Schnittpunkt dieser benachbarten Kreise bestimmt werden, wobei das Klassifizieren dann anhand der Schnittpunkte erfolgt. Durch Ermittlung der jeweiligen Schnittpunkte, und insbesondere durch Auswertung der Abstände zwischen den Schnittpunkten, lässt sich zuverlässig bestimmen, ob die jeweiligen Zielechos auf ein längliches Objekt oder aber punktförmiges Objekt zurückzuführen sind.

Insbesondere ist dabei vorgesehen, dass das Objekt dann durch die Sensoreinrichtung als punktförmiges Objekt klassifiziert wird, wenn der Abstand zwischen den Schnittpunkten kleiner als ein vorgegebener Grenzwert ist. Liegen die Schnittpunkte nahe aneinander, so kann nämlich angenommen werden, dass auch die Reflexionspunkte des Objekts, von denen die ausgesendeten Signale reflektiert werden, relativ dicht aneinander liegen, was auf einen punktförmigen Gegenstand hindeutet. Dies kann entsprechend durch die Sensoreinrichtung detektiert werden, und es kann ein entsprechendes Klassifizierungssignal erzeugt werden, welches das Objekt als punktförmiges Objekt klassifiziert.

Ist der Abstand zwischen den Schnittpunkten hingegen größer als der Grenzwert, kann zu jedem Paar aus zwei benachbarten Kreisen jeweils eine gemeinsame Tangente bestimmt werden. Anhand der Tangenten kann durch die Sensoreinrichtung dann ermittelt werden, ob das Objekt ein ausgedehntes bzw. längliches Objekt ist oder aber es sich bei diesem Objekt um ein Hindernis mit unbekannter Form bzw. mit hoher räumlicher Unsicherheit handelt. Liegen die Tangenten im Wesentlichen parallel zueinander bzw. ist ein Winkel zwischen den Tangenten kleiner als ein Grenzwert, kann das Objekt als ein ausgedehntes bzw. längliches und geradliniges Objekt klassifiziert werden. Wird zwischen den Tangenten jedoch ein größerer Winkel detektiert, so kann die Form des Objekts nicht näher konkretisiert werden, sodass das Objekt als Hindernis mit hoher räumlicher Unsicherheit interpretiert werden kann.

Für die Entfernungswerte werden also so genannte Hypothesen über Schnittpunkte von Kreisen und/oder Hypothesen zu Kreistangenten berechnet. Dies kann durch eine direkte Berechnung der Schnittpunkte und/oder Kreistangenten und/oder aber mithilfe einer Hough-Transformation vorgenommen werden. Bei der Ermittlung von Schnittpunkten zwischen zwei Kreisen kann es insgesamt auch zwei Schnittpunkte geben. Aufgrund der Sensorgeometrie werden diese jedoch auf einen einzigen Schnittpunkt reduziert, indem lediglich ein Schnittpunkt innerhalb von beispielsweise ± 90° der Sensorhauptachse berücksichtigt wird.

Falls von drei aufeinander folgenden Messungen bzw. von drei Entfernungswerten nur die neuesten zwei das oben genannte Kriterium (insbesondere die oben dargestellte Ungleichung) erfüllen, kann weder auf ein punktförmiges noch auf ein ausgedehntes Objekt geschlossen werden. In diesem Falle wird für die älteste Messung auf ein Objekt mit hoher räumlicher Unsicherheit geschlossen. Diese mit hoher räumlicher Unsicherheit behaftete Objektposition kann ausgegeben werden.

Das vorgeschlagene Verfahren ermöglicht die Erkennung von zumindest drei verschiedenen Objekttypen, nämlich von punktförmigen sowie ausgedehnten Objekten, und gegebenenfalls auch von Objekten mit hoher räumlicher Unsicherheit. Es können optional auch weitere Objekttypen in diese Unterscheidung aufgenommen werden. Nach drei Messungen, welche insbesondere das oben genannte Kriterium erfüllen, wird das Objekt klassifiziert und das Ergebnis ausgegeben.

Wird die Berechnung der Objekthypothesen mittels der Hough-Transformation ausgeführt, so kann das Verfahren mit besonders geringer Laufzeit umgesetzt werden. Dabei wird aus den Hypothesen nur jeweils ein Abbildungswert bzw. eine Hypothese gewählt; alle anderen Hypothesen werden verworfen.

Die für die Bestätigung der Hough-Hypothesen notwendige Häufung der Abbildungswerte (Akkumulation) wird dadurch erreicht, dass jeweils nur diejenige Hypothese als gültig betrachtet wird, die aufgrund eines definierten Abstandskriteriums die beste Übereinstimmung liefert. Dies ist vorteilhaft, da die Hough-Transformation die Abbildungswerte diskretisiert und dadurch Mehrdeutigkeiten entstehen können.

Bei dem erfindungsgemäßen Verfahren werden die Messdaten, nämlich die Entfernungswerte, vorzugsweise nur einmalig verrechnet bzw. verwendet. Dadurch wird das Problem gelöst, dass dieselbe Information nicht mehrfach mit einer anderen Information kombiniert werden darf. Sonst könnte es unter Umständen zu Fehlhypothesen kommen, da die mehrfach verrechnete Information fehlerbehaftet sein kann.

Punktförmige und ausgedehnte Objekte können bereits bei einer dreifachen Messung bzw. bei drei Entfernungswerten räumlich bestätigt werden. Dadurch werden Fehlhypothesen unterdrückt. Nicht bestätigte Objekthypothesen können als Information mit hoher räumlicher Unsicherheit ausgegeben werden. Dies erlaubt es der Applikation, auf unbestimmte Objekttypen zu reagieren. Das Verfahren hat außerdem den Vorteil, dass der Detektionsbereich bzw. Erfassungsbereich der Sensoreinrichtung nicht in die Klassifizierung des Objekts einfließen muss. Dies ist besonders vorteilhaft, da der Erfassungsbereich sowohl vom Objekttyp, von der Objektstruktur, der Entfernung, der Temperatur und Luftfeuchtigkeit abhängt und somit in unbekannter Weise variieren kann.

Die Erfindung betrifft außerdem eine Sensoreinrichtung für ein Kraftfahrzeug, welche zum Klassifizieren eines in einem Umgebungsbereich des Kraftfahrzeugs befindlichen Objekts ausgebildet ist. Die Sensoreinrichtung ist zum Durchführen eines erfindungsgemäßen Verfahrens ausgelegt.

Ein erfindungsgemäßes Kraftfahrzeug, insbesondere ein Personenkraftwagen, umfasst eine erfindungsgemäße Sensoreinrichtung.

Die mit Bezug auf das erfindungsgemäße Verfahren vorgestellten bevorzugten Ausführungsformen und deren Vorteile gelten entsprechend für die erfindungsgemäße Sensoreinrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:

Fig. 1 in schematischer Darstellung ein Kraftfahrzeug mit einer Sensoreinrichtung gemäß einer Ausführungsform der Erfindung;

Fig. 2 bis 5 schematische Darstellungen zur Erläuterung eines Kriteriums; und

Fig. 6 bis 9 schematische Darstellungen zur Erläuterung eines Verfahrens gemäß einer Ausführungsform der Erfindung.

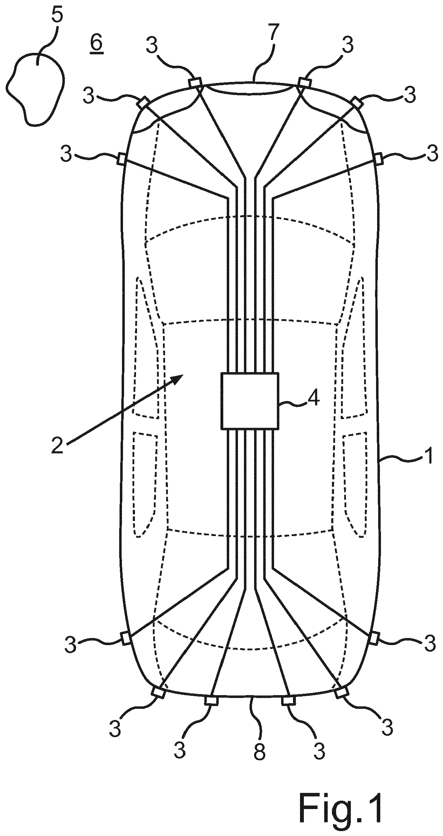

Ein in Fig. 1 dargestelltes Kraftfahrzeug 1 ist beispielsweise ein Personenkraftwagen. Das Kraftfahrzeug 1 beinhaltet eine Sensoreinrichtung 2 mit einer Vielzahl von Abstandssensoren 3, insbesondere Ultraschallsensoren. Die Ultraschallsensoren sind mit einem Steuergerät 4 elektrisch gekoppelt, welches zur Ansteuerung der Abstandssensoren 3 und zur Auswertung von Messdaten der Abstandssensoren 3 ausgebildet ist. Anhand von Messdaten der jeweiligen Abstandssensoren 3 kann das Steuergerät 4 eine Entfernung zu einem fahrzeugexternen Objekt 5 bestimmten, das sich in einem Umgebungsbereich 6 des Kraftfahrzeugs 1 befindet.

Im Ausführungsbeispiel sind eine Vielzahl von Abstandssensoren 3 an einem vorderen Stoßfänger 7 verteilt angeordnet, wobei sich jeweils zumindest ein Abstandssensor 3 an der jeweiligen Seitenflanke des Kraftfahrzeugs 1 befindet. Entsprechend sind beispielhaft eine Mehrzahl von Abstandssensoren 3 auch an einem hinteren Stoßfänger 8 verteilt angeordnet. Die Anzahl sowie die Anordnung der Abstandssensoren 3 am Kraftfahrzeug 1 sind in Fig. 1 lediglich beispielhaft dargestellt. Je nach Ausführungsform können die Anzahl und die Anordnung unterschiedlich sein.

Anhand der gemessenen Abstandswerte kann das Steuergerät 4 verschiedenste Funktionalitäten im Kraftfahrzeug 1 bereitstellen. Bei der Sensoreinrichtung 2 kann es sich beispielsweise um eine so genannte Einparkhilfe handeln, mittels welcher die gemessenen Abstände dem Fahrer signalisiert bzw. mitgeteilt werden. Es kann sich bei der Sensoreinrichtung 2 aber auch um ein vollautomatisches oder semi-autonomes Parkassistenzsystem handeln, mittels welchem eine Parklücke detektiert und eine Parkbahn bestimmt werden kann, entlang welcher das Kraftfahrzeug 1 dann in die zuvor detektierte Parklücke eingeparkt werden kann.

Das Steuergerät 4 ist des Weiteren so ausgelegt, dass es das detektierte Objekt 5 klassifizieren kann. Hierbei kann das Steuergerät 4 zumindest zwischen punktförmigen Objekten 5 einerseits und ausgedehnten bzw. länglichen Objekten 5 andererseits unterscheiden. Bei der Klassifizierung werden im Ausführungsbeispiel drei Entfernungswerte berücksichtigt, welche beispielsweise durch ein und denselben Abstandssensor 3 zu unterschiedlichen Zeitpunkten während einer Bewegung des Kraftfahrzeugs 1 relativ zum Objekt 5 gemessen werden. Zur Klassifizierung des Objekts 5 werden lediglich Entfernungswerte verwendet, welche ein vorgegebenes Kriterium erfüllen, welches nachfolgend näher beschrieben wird.

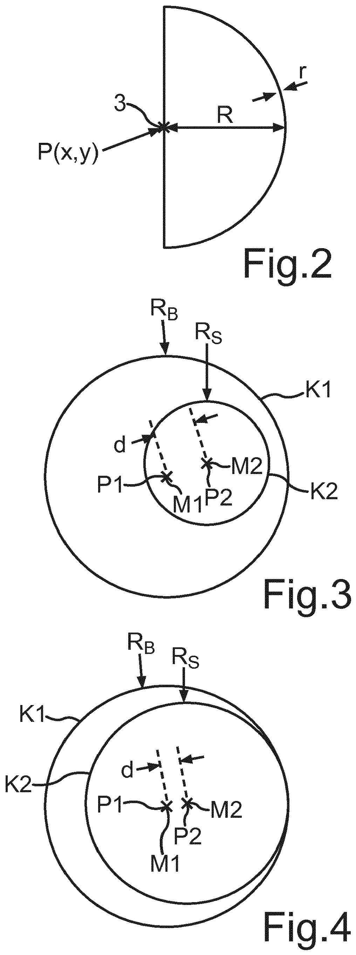

In Fig. 2 ist schematisch und in abstrakter Darstellung eine einzelne Messung mit einem Abstandssensor 3 gezeigt, dessen Position P durch Koordinate x, y definiert ist. Der Abstandssensor 3 misst einen Entfernungswert R, wobei ein möglicher Messfehler für die gemessene Entfernung R mit r bezeichnet ist. Zwei nacheinander folgende Entfernungswerte $R_S$, $R_B$

$$R_S - R_B + d > r_S + r_B,$$

wobei Rs den kleineren der Entfernungswerte, $R_B$ den größeren der Entfernungswerte, d den Abstand zwischen den Sensorpositionen, rs den Messfehler des kleineren Entfernungswerts und $r_B$ den Messfehler des größeren Entfernungswerts bezeichnen.

Mögliche Szenarien sind nun in den Fig. 3 bis 5 dargestellt. Gemäß Fig. 3 misst der Abstandssensor 3 von zwei unterschiedlichen Positionen P1, P2 aus zwei unterschiedliche Entfernungswerte $R_B$, $R_S$. Zu jedem Entfernungswert $R_B$, $R_S$ wird dabei ein Kreis K1, K2 definiert, dessen Mittelpunkt M1, M2 der jeweiligen Sensorposition P1, P2 und dessen Radius dem jeweiligen Entfernungswert $R_B$, $R_S$ entsprechen. Im Szenario gemäß Fig. 3 wird das oben genannte Kriterium nicht erfüllt, da keine Berührungspunkte bzw. Schnittpunkte zwischen den Kreisen K1, K2 gegeben sind.

In Fig. 4 ist ebenfalls ein Szenario gezeigt, bei welchem das Kriterium nicht erfüllt ist. Hier sind nämlich unendlich viele Schnittpunkte gegeben, sodass lediglich mehrdeutige Objekthypothesen möglich sind.

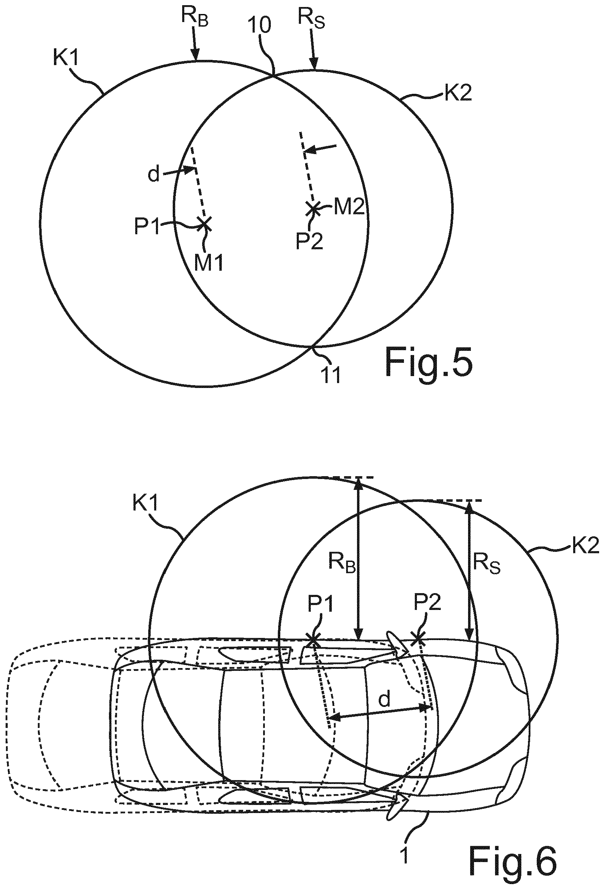

Ein Szenario, bei welchem hingegen das obige Kriterium erfüllt ist, ist in Fig. 5 dargestellt. Hier ist der Abstand d zwischen den Sensorpositionen P1, P2 so groß, dass lediglich zwei Schnittpunkte 10, 11 zwischen den Kreisen K1, K2 gegeben sind. Da der Abstandssensor 3 typischerweise eine bestimmte Erfassungsrichtung aufweist, wird einer der Schnittpunkte 10, 11 herausgefiltert und nur derjenige Schnittpunkt 10, 11 berücksichtigt, welcher bezüglich der Sensorhauptachse innerhalb von ± 90° liegt. Dies ist in Fig. 5 beispielsweise der Schnittpunkt 10.

Wie aus Fig. 6 hervorgeht, werden die unterschiedlichen Entfernungswerte $R_B$, $R_S$ während einer Bewegung des Kraftfahrzeugs 1 erfasst. Die Entfernungswerte $R_B$, $R_S$ werden also in nacheinander folgenden Messungen mit demselben Abstandssensor 3 ermittelt. Es ist jedoch auch möglich, dass zwei Entfernungswerte $R_B$, $R_S$ gleichzeitig mittels unterschiedlicher Abstandssensoren 3 erfasst werden.

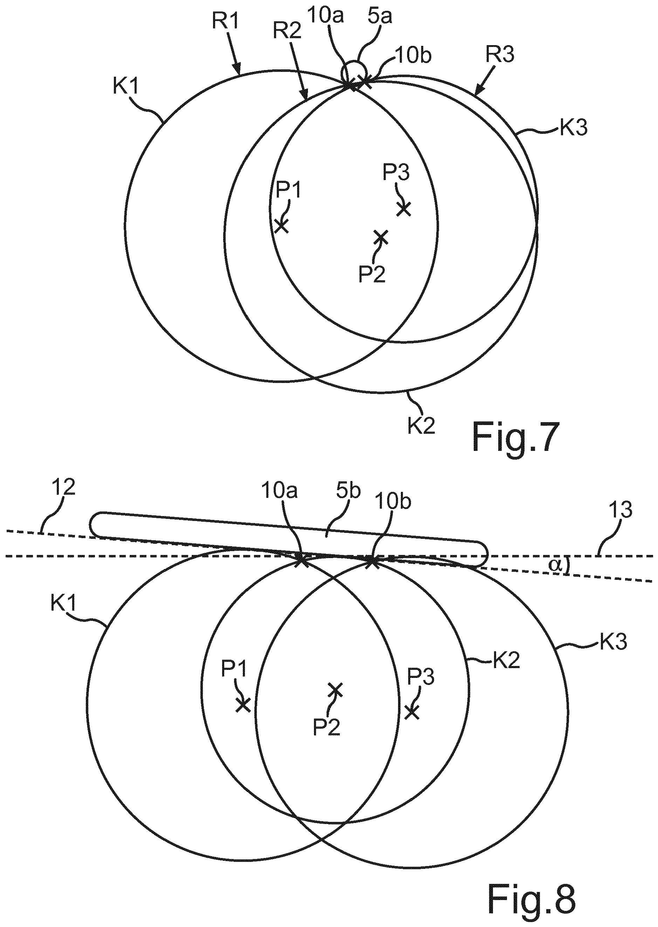

Zur Klassifizierung des Objekts 5 werden im Ausführungsbeispiel drei Entfernungswerte benötigt. Wie in Fig. 7 dargestellt ist, werden die Entfernungswerte R1, R2, R3 von drei unterschiedlichen Sensorpositionen P1, P2, P3 aus erfasst. Zu jedem Entfernungswert R1, R2, R3 wird jeweils ein Kreis K1, K2, K3 definiert. Zu jedem Paar aus benachbarten Kreisen K1 und K2 sowie K2 und K3 wird dann der jeweilige Schnittpunkt 10a, 10b ermittelt. Durch das Steuergerät 4 wird dann überprüft, ob ein Abstand zwischen diesen Schnittpunkten 10a, 10b (sowohl in x-Richtung als auch in y-Richtung) kleiner als ein vorgegebener Grenzwert ist. Ist dies erfüllt, wird das Objekt als punktförmiges Objekt 5a klassifiziert, dessen Abmessungen entlang der Fahrzeugbewegung geringer als eine bestimmte Schwelle sind.

In Fig. 8 ist hingegen eine Situation gezeigt, in welcher die beiden Schnittpunkte 10a, 10b in einem Abstand voneinander liegen, welcher größer als der vorgegebene Grenzwert ist. Wird dies durch das Steuergerät 4 detektiert, wird zu jedem Paar aus benachbarten Kreisen K1, K2 sowie K2, K3 jeweils eine gemeinsame Tangente 12, 13 bestimmt. Liegt ein Winkel $\alpha$ zwischen diesen Tangenten 12, 13 unterhalb eines vorgegebenen Schwellwerts, wird das detektierte Objekt als ein längliches bzw. ausgedehntes, und insbesondere geradliniges, Objekt 5b klassifiziert.

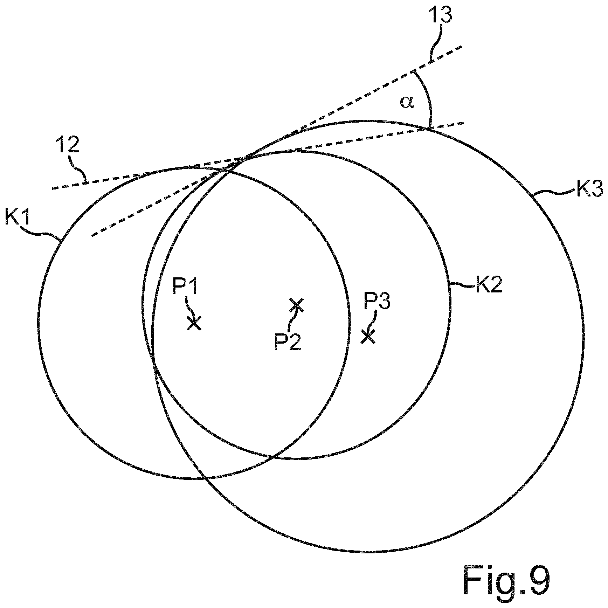

Wird durch das Steuergerät 4 hingegen detektiert, dass der Winkel $\alpha$ größer als der Schwellwert ist, wird das Objekt 5 als Objekt mit hoher räumlicher Unsicherheit und somit als Objekt mit einer unbekannten Form klassifiziert. Eine solche Situation ist in Fig. 9 dargestellt.

**Patentansprüche**

1. Verfahren zum Klassifizieren eines in einem Umgebungsbereich (6) eines Kraftfahrzeugs (1) befindlichen Objekts (5) mittels einer Sensoreinrichtung (2) des Kraftfahrzeugs (1),
   wobei von zumindest zwei voneinander unterschiedlichen Sensorpositionen (P1, P2, P3) aus jeweilige Entfernungswerte (R1, R2, R3) zu dem zu klassifizierenden Objekt (5) durch die Sensoreinrichtung (2) erfasst werden und das Klassifizieren in Abhängigkeit von den zumindest zwei Entfernungswerten (R1, R2, R3) dahingehend erfolgt, dass bei dem Objekt (5) zumindest zwischen einem punktförmigen Objekt (5a) und einem ausgedehnten Objekt (5b) unterschieden wird,
   wobei die zumindest zwei Sensorpositionen (P1, P2, P3) voneinander unterschiedliche Positionen ein und desselben Abstandssensors (3) der Sensoreinrichtung (2) sind, wobei die zumindest zwei Entfernungswerte (R1, R2, R3) durch den Abstandssensor (3) zu unterschiedlichen Zeitpunkten während einer Bewegung des Kraftfahrzeugs (1) erfasst werden, wobei durch die Sensoreinrichtung (2) überprüft wird, ob bezüglich der zumindest zwei Entfernungswerte (R1, R2, R3) ein vorbestimmtes Kriterium erfüllt ist, und die zumindest zwei Entfernungswerte (R1, R2, R3) nur unter der Voraussetzung des Erfülltseins des vorbestimmten Kriteriums zur Klassifizierung des Objekts (5) ausgewertet werden, **dadurch gekennzeichnet, dass** beim Überprüfen des Erfülltseins des vorbestimmten Kriteriums zusätzlich zu den zumindest zwei Entfernungswerten (R1, R2, R3) zumindest der folgende Parameter berücksichtigt wird:

   - ein Abstand (d) zwischen den zumindest zwei Sensorpositionen (P1, P2, P3), aufgrund einer durch das Kraftfahrzeug (1) zwischen den Zeitpunkten der Erfassung der Entfernungswerte (R1, R2, R3) zurückgelegten Wegstrecke,

   und dass das vorgegebene Kriterium folgende Bedingung umfasst:

$$R_S - R_B + d > r_S + r_B,$$

   wobei Rs den kleineren der Entfernungswerte, $R_B$ den größeren der Entfernungswerte, d den Abstand zwischen den Sensorpositionen, rs den Messfehler des kleineren Entfernungswerts und $r_B$ den Messfehler des größeren Entfernungswerts bezeichnen.

2. Verfahren nach Anspruch 1,
   **dadurch gekennzeichnet, dass**
   beim Überprüfen des Erfülltseins des vorbestimmten Kriteriums zusätzlich der folgende Parameter berücksichtigt wird:

   - ein jeweiliger Messfehler (r), mit welchem die zumindest zwei Entfernungswerte (R1, R2, R3) behaftet sind.

3. Verfahren nach einem der vorhergehenden Ansprüche,
   **dadurch gekennzeichnet, dass**
   von zumindest drei voneinander unterschiedlichen Sensorpositionen (P1, P2, P3) aus jeweilige Entfernungswerte (R1, R2, R3) zu dem zu klassifizierenden Objekt (5) durch die Sensoreinrichtung (2) erfasst werden und das Klassifizieren in Abhängigkeit von den zumindest drei Entfernungswerten (R1, R2, R3) erfolgt.

**4.** Verfahren nach Anspruch 3,
**dadurch gekennzeichnet, dass**
zu den zumindest drei Entfernungswerten (R1, R2, R3) jeweils ein Kreis (K1, K2, K3) bestimmt wird, dessen Mittelpunkt (M1, M2) der jeweiligen Sensorposition (P1, P2, P3) und dessen Radius dem jeweiligen Entfernungswert (R1, R2, R3) entsprechen, und das Klassifizieren des Objekts (5) durch Auswertung der zumindest drei Kreise (K1, K2, K3) erfolgt.

**5.** Verfahren nach Anspruch 4,
**dadurch gekennzeichnet, dass**
zu jedem Paar aus zwei benachbarten Kreisen (K1, K2, K3) jeweils ein Schnittpunkt (10a, 10b) dieser benachbarten Kreise (K1, K2, K3) bestimmt wird und das Klassifizieren anhand der Schnittpunkte (10a, 10b) erfolgt.

**6.** Verfahren nach Anspruch 5,
**dadurch gekennzeichnet, dass**
das Objekt (5) dann durch die Sensoreinrichtung (2) als punktförmiges Objekt (5a) klassifiziert wird, wenn ein Abstand zwischen den Schnittpunkten (10a, 10b) kleiner als ein vorgegebener Grenzwert ist.

**7.** Verfahren nach Anspruch 6,
**dadurch gekennzeichnet, dass**
falls der Abstand zwischen den Schnittpunkten (10a, 10b) größer als der Grenzwert ist, zu jedem Paar aus zwei benachbarten Kreisen (K1, K2, K3) jeweils eine gemeinsame Tangente (12, 13) bestimmt und anhand der Tangenten (12, 13) durch die Sensoreinrichtung (2) ermittelt wird, ob das Objekt (5) ein ausgedehntes Objekt (5b) ist.

**8.** Sensoreinrichtung (2) für ein Kraftfahrzeug (1), zum Klassifizieren eines in einem Umgebungsbereich (6) des Kraftfahrzeugs (1) befindlichen Objekts (5), wobei die Sensoreinrichtung (2) dazu ausgelegt ist, von zumindest zwei voneinander unterschiedlichen Sensorpositionen (P1, P2, P3) aus jeweilige Entfernungswerte (R1, R2, R3) zu dem zu klassifizierenden Objekt (5) zu erfassen und im Rahmen der Klassifizierung zumindest zwischen einem punktförmigen Objekt (5a) und einem ausgedehnten Objekt (5b) in Abhängigkeit von den zumindest zwei Entfernungswerten (R1, R2, R3) zu unterscheiden, wobei die Sensoreinrichtung (2) dazu ausgelegt ist zu überprüfen, ob bezüglich der zumindest zwei Entfernungswerte (R1, R2, R3) ein vorbestimmtes Kriterium erfüllt ist, und die zumindest zwei Entfernungswerte (R1, R2, R3) nur unter der Voraussetzung des Erfülltseins des vorbestimmten Kriteriums zur Klassifizierung des Objekts (5) auszuwerten, **dadurch gekennzeichnet, dass** die Sensoreinrichtung (2) dazu ausgelegt beim Überprüfen des Erfülltseins des vorbestimmten Kriteriums zusätzlich zu den zumindest zwei Entfernungswerten (R1, R2, R3) folgenden Parameter zu berücksichtigen:

- ein Abstand (d) zwischen den zumindest zwei Sensorpositionen (P1, P2, P3) aufgrund einer durch das Kraftfahrzeug (1) zwischen den Zeitpunkten der Erfassung der Entfernungswerte (R1, R2, R3) zurückgelegten Wegstrecke,

und dass das vorgegebene Kriterium folgende Bedingung umfasst:

$$R_S - R_B + d > r_S + r_B,$$

wobei Rs den kleineren der Entfernungswerte, $R_B$ den größeren der Entfernungswerte, d den Abstand zwischen den Sensorpositionen, rs den Messfehler des kleineren Entfernungswerts und $r_B$ den Messfehler des größeren Entfernungswerts bezeichnen.

**9.** Kraftfahrzeug (1) mit einer Sensoreinrichtung (2) nach Anspruch 8.

**Claims**

**1.** Method for classifying an object (5), located in a surrounding area (6) of a motor vehicle (1), by means of a sensor device (2) of the motor vehicle (1), wherein respective distance values (R1, R2, R3) relating to the distance from the object (5) to be classified are sensed by the sensor device (2) from at least two different sensor positions (P1, P2, P3), and the classification is carried out in accordance with the at least two distance values (R1, R2, R3) to the effect that a differentiation is made for the object (5) at least between a punctiform object (5a) and an extended object (5b), wherein the at least two sensor positions (P1, P2, P3) assume different positions from one another and are of the same distance sensor (3) of the sensor device (2), wherein the at least two distance values (R1, R2, R3) are sensed by the distance sensor (3) at different times during a movement of the motor vehicle (1), wherein the sensor device (2) checks whether a predetermined criterion is satisfied with respect to the at least two distance values (R1, R2, R3), and the at least two distance values (R1, R2, R3) are evaluated only on condition that the predetermined criterion for classifying the object (5) is satisfied, **characterized in that** during the checking as to whether the predetermined criterion is satisfied, in addition to the at least two distance values (R1, R2, R3) at least the following parameter is taken into account:

- a distance (d) between the at least two sensor positions (P1, P2, P3) on the basis of a distance which is travelled by the motor vehicle (1) between the times of sensing of the distance values (R1, R2, R3),

and **in that** the predefined criterion comprises the following condition:

$$R_S - R_B + d > r_S + r_B,$$

where $R_S$ denotes the smaller of the distance values, $R_B$ denotes the larger of the distance values, d denotes the distance between the sensor positions, $r_S$ denotes the measuring error of the smaller distance value and $r_B$ denotes the measuring error of the larger distance value.

2. Method according to Claim 1,
   **characterized in that**
   during the checking as to whether the predetermined criterion is satisfied, the following parameter is additionally taken into account:

   - a respective measuring error (r) which the at least two distance values (R1, R2, R3) have.

3. Method according to one of the preceding claims,
   **characterized in that**
   respective distance values (R1, R2, R3) relating to the distance from the object (5) to be classified are sensed by the sensor device (2) from at least three different sensor positions (P1, P2, P3) from one another, and the classification is carried out in accordance with the at least three distance values (R1, R2, R3).

4. Method according to Claim 3,
   **characterized in that**
   for each of the at least three distance values (R1, R2, R3) a circle (K1, K2, K3) is determined whose centre point (M1, M2) corresponds to the respective sensor position (P1, P2, P3) and whose radius corresponds to the respective distance value (R1, R2, R3), and the classification of the object (5) is carried out by evaluating the at least three circles (K1, K2, K3).

5. Method according to Claim 4,
   **characterized in that**
   for each pair composed of two adjacent circles (K1, K2, K3), in each case an intersection point (10a, 10b) of these adjacent circles (K1, K2, K3) is determined, and the classification is carried out on the basis of the intersection points (10a, 10b).

6. Method according to Claim 5,
   **characterized in that**
   the object (5) is classified as a punctiform object (5a) by the sensor device (2) if a distance between the points of intersection (10a, 10b) is smaller than a predefined limiting value.

7. Method according to Claim 6,
   **characterized in that**
   if the distance between the intersection points (10a, 10b) is larger than the limiting value, in each case a common tangent (12, 13) is determined from each pair composed of two adjacent circles (K1, K2, K3), and on the basis of the tangents (12, 13) the sensor device (2) ascertains whether the object (5) is an extended object (5b).

8. Sensor device (2) for a motor vehicle (1) for classifying an object (5) which is located in a surrounding area (6) of the motor vehicle (1),
   wherein the sensor device (2) is configured to sense distance values (R1, R2, R3) relating to the distance from the object (5) to be classified from the at least two different sensor positions (P1, P2, P3), and to differentiate, within the scope of the classification, at least between a punctiform object (5a) and an extended object (5b) in accordance with at least two distance values (R1, R2, R3),
   wherein the sensor device (2) is configured to check whether a predetermined criterion is satisfied with respect to the at least two distance values (R1, R2, R3), and to evaluate the at least two distance values (R1, R2, R3) only on condition that the predefined criterion for classifying the object (5) is satisfied,
   **characterized in that** the sensor device (2) is configured to take into account, during the checking as to whether the predetermined criterion is satisfied, in addition to the at least two distance values (R1, R2, R3) the following parameter:

   - a distance (d) between the at least two sensor positions (P1, P2, P3) on the basis of a distance which is travelled by the motor vehicle (1) between the times of sensing of the distance values (R1, R2, R3),

   and **in that** the predefined criterion comprises the following condition:

   $$R_S - R_B + d > r_S + r_B,$$

   where $R_S$ denotes the smaller of the distance values, $R_B$ denotes the larger of the distance values, d denotes the distance between the sensor positions, $r_S$ denotes the measuring error of the smaller distance value and $r_B$ denotes the measuring error of the larger distance value.

9. Motor vehicle (1) having a sensor device (2) according to Claim 8.

## Revendications

1. Procédé de classification d'un objet (5) situé dans une zone environnante (6) d'un véhicule automobile (1) au moyen d'un dispositif capteur (2) du véhicule automobile (1),
dans lequel des valeurs de distance respectives (R1, R2, R3) de l'objet (5) à classer sont détectées, à partir d'au moins deux positions de capteur (P1, P2, P3) différentes l'une de l'autre, par le dispositif capteur (2) et la classification est effectuée en fonction desdites au moins deux valeurs de distance (R1, R2, R3) de manière à effectuer une distinction concernant l'objet (5) entre au moins entre un objet ponctuel (5a) et un objet étendu (5b),
dans lequel lesdites au moins deux positions de capteur (P1, P2, P3) sont des positions mutuellement différentes d'un seul et même capteur de distance (3) du dispositif capteur (2), dans lequel lesdites au moins deux valeurs de distance (R1, R2, R3) sont détectées par le capteur de distance (3) à des instants différents pendant un déplacement du véhicule automobile (1),
dans lequel il est vérifié par le dispositif capteur (2) si un critère prédéterminé est respecté concernant lesdites au moins deux valeurs de distance (R1, R2, R3), et lesdites au moins deux valeurs de distance (R1, R2, R3) ne sont analysées qu'à condition que le critère prédéterminé soit respecté pour classer l'objet (5), **caractérisé en ce que**, lors de la vérification du respect du critère prédéterminé, au moins le paramètre suivant est pris en compte en plus desdites deux au moins valeurs de distance (R1, R2, R3) :

  - une distance (d) entre lesdites au moins deux positions de capteur (P1, P2, P3) résultant d'une distance parcourue par le véhicule automobile (1) entre les instants de détection des valeurs de distance (R1, R2, R3),

et **en ce que** le critère prédéterminé comprend la condition suivante :

$$R_S - R_B + d > r_S + r_B,$$

où $R_S$ représente la plus petite des valeurs de distance, $R_B$ la plus grande des valeurs de distance, d la distance entre les positions de capteur, rs l'erreur de mesure de la valeur de distance la plus petite et

$r_B$ l'erreur de mesure de la valeur de distance la plus grande.

2. Procédé selon la revendication 1,
**caractérisé en ce que** le paramètre suivant est en outre pris en compte lors de la vérification du respect du critère prédéterminé :

  - une erreur de mesure respective (r) affectant lesdites au moins deux valeurs de distance (R1, R2, R3).

3. Procédé selon l'une des revendications précédentes,
**caractérisé en ce qu'**à partir d'au moins trois positions de capteur (P1, P2, P3) différentes les unes des autres, des valeurs de distance respectives (R1, R2, R3) de l'objet (5) à classer sont détectés par le dispositif capteur (2) et **en ce que** la classification est effectuée en fonction desdites au moins trois valeurs de distance (R1, R2, R3).

4. Procédé selon la revendication 3,
**caractérisé en ce qu'**un cercle (K1, K2, K3) est respectivement déterminé pour chacune desdites au moins trois valeurs de distance (R1, R2, R3), le centre (M1, M2) du cercle correspondant à la position de capteur (P1, P2, P3) respective et son rayon correspondant à la valeur de distance (R1, R2, R3) respective, et la classification de l'objet (5) est effectuée par analyse desdits au moins trois cercles (K1, K2, K3).

5. Procédé selon la revendication 4,
**caractérisé en ce qu'**un point d'intersection (10a, 10b) desdits cercles adjacents (K1, K2, K3) est déterminé pour chaque paire de deux cercles adjacents (K1, K2, K3) et **en ce que** la classification est effectuée sur la base des points d'intersection (10a, 10b).

6. Procédé selon la revendication 5,
**caractérisé en ce que** l'objet (5) est classé comme étant un objet ponctuel (5a) par le dispositif capteur (2) lorsqu'une distance entre les points d'intersection (10a, 10b) est inférieure à une valeur limite prédéfinie.

7. Procédé selon la revendication 6,
**caractérisé en ce que**, si la distance entre les points d'intersection (10a, 10b) est supérieure à la valeur limite, une tangente commune (12, 13) est respectivement déterminée pour chaque paire de deux cercles adjacents (K1, K2, K3) et le dispositif capteur (2) détermine sur la base des tangentes (12, 13) si l'objet (5) est un objet étendu (5b).

8. Dispositif capteur (2) pour véhicule automobile (1), destiné à classer un objet (5) situé dans une zone environnante (6) du véhicule automobile (1),
dans lequel le dispositif capteur (2) est conçu pour détecter des valeurs de distance respectives (R1, R2, R3) de l'objet (5) à classer à partir d'au moins deux positions de capteur (P1, P2, P3) différentes l'une de l'autre, et pour effectuer dans le cadre de la classification une distinction entre au moins un objet ponctuel (5a) et un objet étendu (5b) en fonction desdites au moins deux valeurs de distance (R1, R2, R3), dans lequel le dispositif capteur (2) est conçu pour vérifier si un critère prédéterminé est respecté concernant lesdites au moins deux valeurs de distance (R1, R2, R3), et pour n'analyser lesdites au moins deux valeurs de distance (R1, R2, R3) qu'à condition que le critère prédéterminé soit respecté pour classer l'objet (5),
**caractérisé en ce que** le dispositif capteur (2) est conçu pour prendre en compte, lors de la vérification du respect du critère prédéterminé, en plus desdites au moins deux valeurs de distance (R1, R2, R3), le paramètre suivant :

- une distance (d) entre lesdites au moins deux positions de capteur (P1, P2, P3) résultant d'une distance parcourue par le véhicule automobile (1) entre les instants de détection des valeurs de distance (R1, R2, R3),

et **en ce que** le critère prédéterminé comprend la condition suivante :

$$R_S - R_B + d > r_S + r_B,$$

où $R_S$ représente la plus petite des valeurs de distance, $R_B$ la plus grande des valeurs de distance, d la distance entre les positions de capteur, rs l'erreur de mesure de la valeur de distance la plus petite et $r_B$ l'erreur de mesure de la valeur de distance la plus grande.

9. Véhicule automobile (1) comprenant un dispositif capteur (2) selon la revendication 8.

Fig.1

Fig.2

Fig.3

Fig.4

Fig.5

Fig.6

Fig.7

Fig.8

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005059902 A1
- DE 102007035219 A1
- DE 10361315 A1
- DE 102009045286 A1
- DE 4023538 A1
- EP 2317338 A2
- EP 2333578 A2